(19) Europäisches Patentamt

European Patent Office

Office européen des brevets

(11) EP 1 418 519 A1

(12) EUROPEAN PATENT APPLICATION

(43) Date of publication:
12.05.2004 Bulletin 2004/20

(51) Int Cl.⁷: G06F 17/60

(21) Application number: 03394102.2

(22) Date of filing: 05.11.2003

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 05.11.2002 EP 02394108

(71) Applicant: Comhra Limited
Skibbereen, County Cork (IE)

(72) Inventors:
• Kelly, Sean
Kilmacanougue, County Wicklow (IE)

• Rogers, Christopher
Balgowlah, NSW (AU)
• Quarmby, Murray
Wahroonga, NSW 2076 (AU)
• Boon, Christopher
Skibbereen, County Cork (IE)

(74) Representative: Weldon, Michael James et al
c/o John A. O'Brien & Associates,
Third Floor,
Duncairn House,
14 Carysfort Avenue
Blackrock, Co. Dublin (IE)

(54) **A dialogue management system**

(57) A dialogue management system has an incoming dialogue manager (2) for receiving customer information. It automatically updates a profile database and passes data to a segmentation manager for(3) for dynamically determining a current customer segment. In real time, a segmentation decision is used by a feedback manager (10) to generate questions for the customer. Thus the managers (2,3,10) operate in a real time cycle involving the customer to gather data and assist the customer as if a personal service were being provided.

Fig. 1

**Description**

Field of the Invention

The invention relates to dialogue management for dialogue between large organisations and customers.

Prior Art Discussion

At present many business enterprises operate data processing systems which perform customer interaction and data capture for use in provision of goods or services with the aim of improving customer loyalty and profitability. The businesses are, for example, Internet retailers, banks, utilities, stockbrokers, insurers, "telcos", and media companies. The data processing systems include, for example, functionality for CRM, accounting, market research, ordering, payments, fault reporting, and complaints. Each individual system may be effective at managing a customer dialogue. However in many businesses there can be a large degree of duplication in customer dialogues, causing a lack of business efficiency and customer inconvenience. This situation can also lead to erroneous and inconsistent customer data being stored in the diverse systems. Also, the dialogues are often not as relevant as they should be due to the most relevant customer information not being used in any one feedback message to a customer.
The invention addresses these problems.

SUMMARY OF THE INVENTION

According to the invention, there is provided dialogue management system for communication between an enterprise and customers, the system comprising:

an incoming dialogue manager for receiving information from customers and for writing the information to memory;

a segmentation manager for operating in real time to read said received information, to dynamically allocate a customer to a segment, and to provide a segmentation decision; and

a feedback manager for using said segmentation decision and stored customer data to generate a feedback message for a customer in real time.

In one embodiment, the dialogue management system interfaces with a plurality of enterprise sub-systems to perform integrated customer dialogue.
In one embodiment, the incoming dialogue manager controls a unified customer profile database on behalf of all of the sub-systems.
In one embodiment, the segmentation manager performs offline segmentation analysis using data retrieved from a customer profile database maintained by the incoming dialogue manager.
In one embodiment, the incoming dialogue, segmentation, and feedback dialogue managers achieve real-time closed loop dialogue management by pipelining.
In another embodiment, the pipelining involves each manager passing an output to the next manager in turn, and a session controller maintaining a session continuity between an outgoing message from the feedback dialogue manner and the incoming dialogue manager.
In one embodiment, the system further comprises a rules editor for user editing of segmentation rules.
In one embodiment, there are a plurality of segmentation models, at least some of which are modified by the rules editor.
In one embodiment, the segmentation manager executes a bias computation process, in which bias is determined for each question in a dialogue, bias values are determined for all questions in total, and bias is determined for a model after processing of a plurality of dialogues.
In one embodiment, the segmentation manager executes a confidence rating process to determine a confidence value for a segmentation decision.
In one embodiment, said process allocates an importance rating to each question, determines the importance of each question in the context of the dialogue and uses these values to allocate a confidence rating to a set of customer responses.
In one embodiment, the segmentation manager executes a separation process to determine a degree of difference between the segmentation decision and a next segment.
In one embodiment, the segmentation manager determines a primary separation between a highest and second segments, and a secondary separation between the second and a third segment and applies boosting in the primary and secondary separation values to determine a separation confidence value.

In a further embodiment, the segmentation manager performs clustering for data mining to execute a segmentation model.

In one embodiment, the feedback manager associates pre-set customer questions with segments, and retrieves these in real time in response to receiving a segmentation decision.

In one embodiment, the feedback and the incoming dialogue managers download programs to client systems for execution locally under instructions from a customer.

In one embodiment, the feedback manager and the incoming dialogue managers access a stored hierarchy to generate a display for customer dialogue in a consistent format.

In one embodiment, the hierarchy includes, in descending order, subject, category, sub-category, field group, and field for an information value.

In one embodiment, the incoming dialogue manager accesses in real time a rules base comprising an editor for user editing of rules for receiving data.

In one embodiment, the system uses a mark-up language protocol for invoking applications and passing messages.

## DETAILED DESCRIPTION OF THE INVENTION

### Brief Description of the Drawings

The invention will be more clearly understood from the following description of some embodiments thereof, given by way of example only with reference to the accompanying drawings in which:-

Fig. 1 is a flow diagram illustrating operation of a dialogue management system of the invention;

Fig. 2 is a diagram illustrating linking of sub-systems with the dialogue management system;

Fig. 3 is a sample input of a segmentation engine of the system;

Fig. 4 is a diagram illustrating segmentation database structure;

Fig. 5 is a sample display page for customer data capture; and

Figs. 6 to 12 are diagrams illustrating detailed aspects of segmentation

### Description of the Embodiments

### Overall System

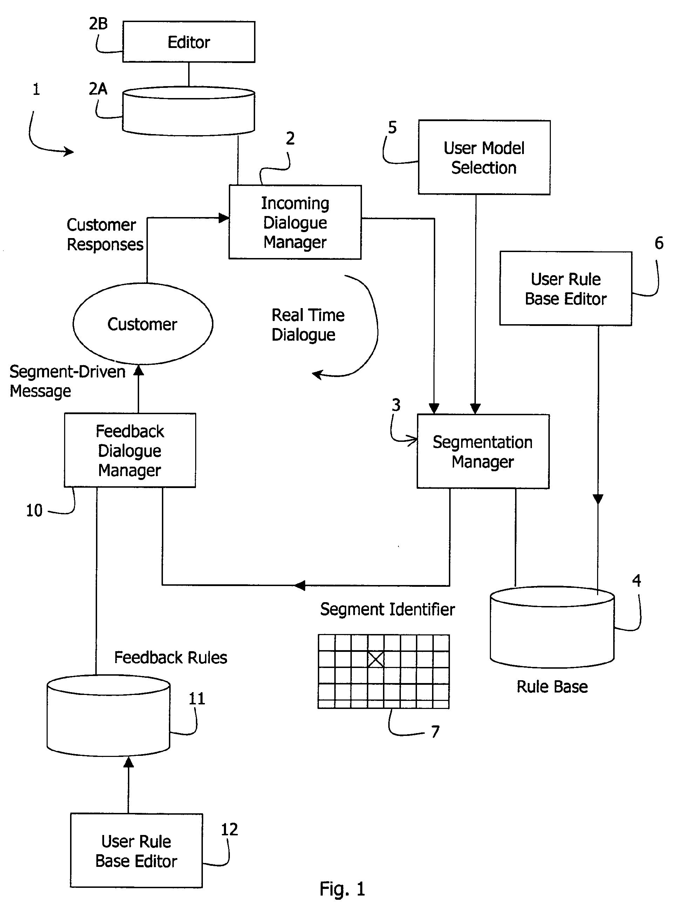

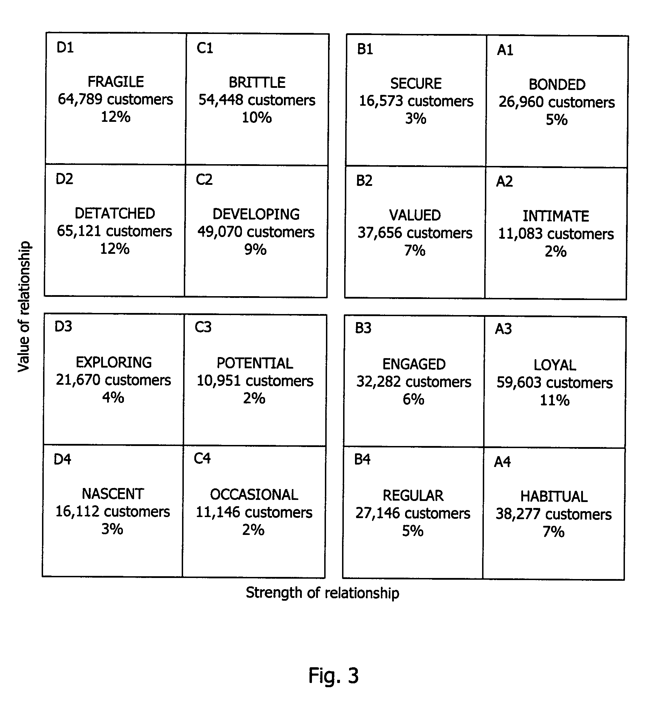

Referring to Fig. 1 a dialogue management system 1 comprises a manager 2 for incoming dialogue management. The manager 1 performs dialogue presentation and data retrieval according to rules retrieved from a rule base 2A updated by an editor 2B. The manager 2 is linked with a manager 3 for segmentation analysis. The manager 3 performs segmentation according to a segmentation model retrieved from a rule base 4. The applicable model may be chosen by a user at an interface 5 for a particular time period, however, the user is not involved in an actual dialogue, this being performed automatically by the system 1 in real time. The rule base 4 may be edited in a versatile manner offline by a user rule base editor 6.

The segmentation manager 3 outputs a segmentation decision 7, which is an identifier of a selected cell in an array as illustrated diagrammatically. The decision is fed to a feedback dialogue manager 10. This uses feedback rules 11, which are edited offline by a user rule editor 12. Using these rules and the segmentation decision 7, the function 10 generates a feedback message for the customer. The customer in turn replies to continue the real-time cycle dialogue. The incoming messages from the customer are received by the incoming dialogue manager 2 and are dynamically written to a profile database and to memory of the manager 2 for the current dialogue.

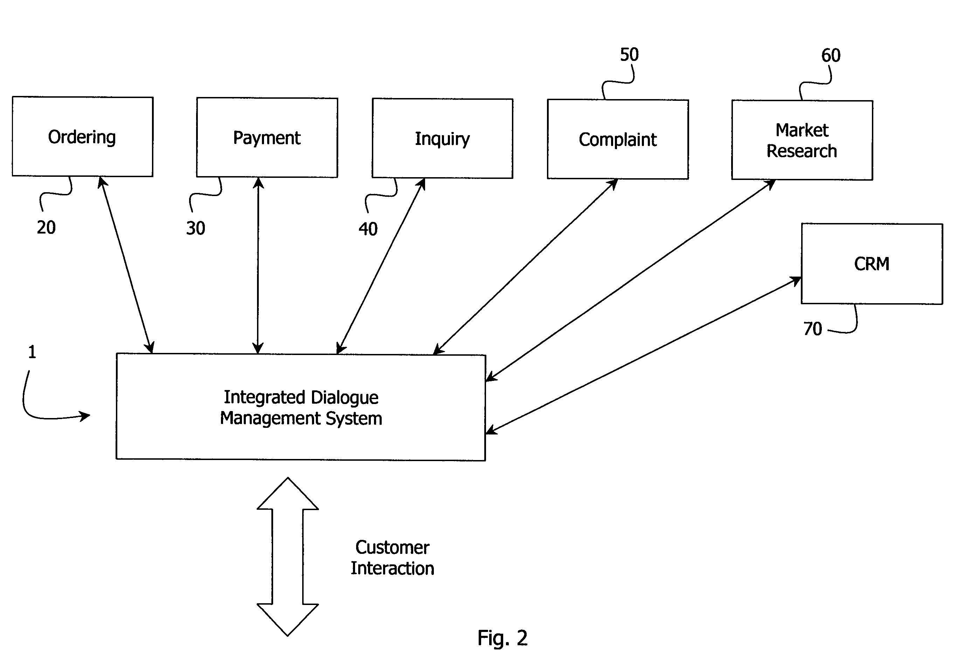

As shown in Fig. 2, the system 1 can perform real time dialogues on behalf of a wide variety of enterprises sub-systems, including for example ordering 20, payment 30, inquiry 40, complaint 50, marker research 60, and customer relationship management (CRM) 70 sub-systems.

An advantageous aspect of operation of the system 1 is that the segmentation manager 3 is in the real-time dialogue loop. Thus, the data it operates with is up to date and relevant, and it can immediately assist with generation of relevant feedback messages by the feedback manager 10. Thus, the system 1 achieves real time intelligent dialogue based on a structural analysis of customer attributes and behaviour.

The segmentation manager 3 operates with both the real time customer information gleaned from the dialogue, and with data stored by any of all of the sub-systems 20-70. The customer information received by the incoming dialogue manager 2 allows a unified and correct up-to-date customer profile to be stored, either centrally in the system 1 or distributed across the sub-systems 20-70. The manager 2 also allows customers to specify permissions concerning how their personal data is used, and to amend or update the information stored about themselves.

The feedback dialogue manager 10 stores predefined messages for future use, and associates individual messages with segments and customer actions, and it provides complete control over timing of message transmission.

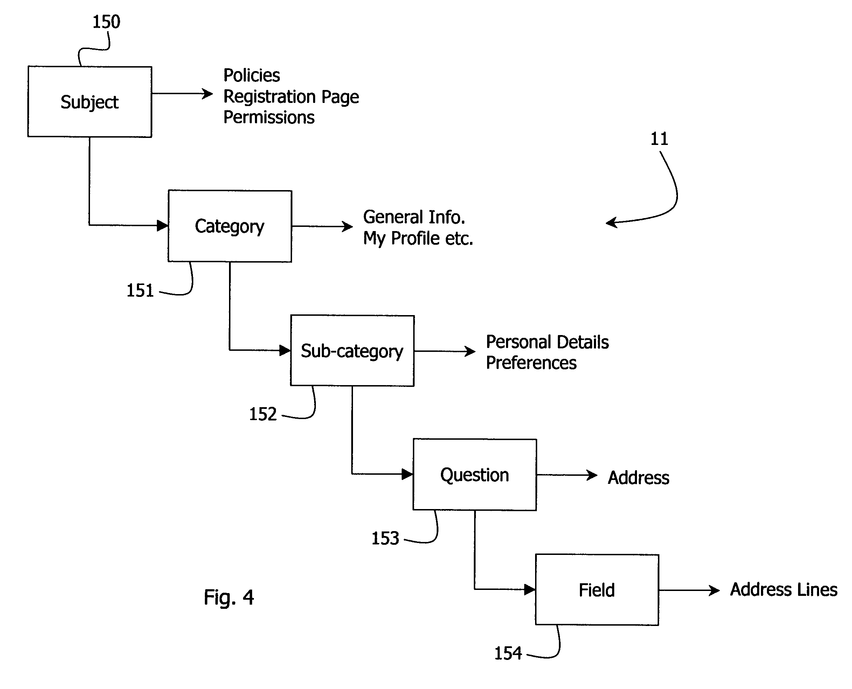

Turning again to the segmentation manager 3, a sample offline output 100 (as opposed to real time dialogue output) is shown in Fig. 3. This is the result of segmentation of a selected group of 542,887 customers according to the value and the strength of each customer's relationship with the enterprise. The segment containing high loyalty and high profitability contains only 17% of customers, causing the enterprise concern. The quadrant representing high profitability and low loyalty contains the largest concentration of customers (43%), causing even more concern. However, the number of customers in the quadrant representing low loyalty and low profitability is encouragingly low. The segmentation manager 3 uses a clustering model (described in more detail below) for further processing of the top right-hand and left-hand quadrants. Fresh segmentation models are then created to explore channel preference, product usage, and demographic characteristics. Thus, the segmentation manager 3 can generate very useful business information offline for an enterprise. A very advantageous aspect is that relevant customer information is captured by the incoming dialogue manager 2 in real-time operation of the system 1 in which the segmentation manager 3 is involved. The technical features of the managers provide for real time cyclic operation to allow a large enterprise to communicate with customers in a manner akin to that of a small enterprise in which a more personal service is possible. The internal communications architecture uses XML for invoking applications and passing messages, SOAP (Simple Object Access Protocol) as an object broker, and HTTP for browser communication.

Feedback Dialogue Manager 10

Within the feedback dialogue manager 10, a function outputs forms for customer dialogues, which forms are suitable for display on a customer's browser. Alternatively, where offline communication is appropriate the feedback manager 10 can generate an email message to the customer, or to all customers in a segment. The generated pages are published into a Web-based application as either inserted frames or as full pages viewable by a browser. Once a customer connection is made, the frame will display as a normal seamless part of the Web application. The manager 10 can generate micro-frames for display within windows. The display types can be set to one of:

   (a) display whilst empty, which steps displaying if the customer has already entered data, or
   (b) display always, or
   (c) display once.

The manager 10 populates a feedback table with messages and/or Web forms for real-time access by customers.

System 1 generated ASP and HTML pages utilise the 'Fat Client' architecture principle. This principle reduces to the need to go back to the 'Server' for additional data based on customer responses. Whilst this principle is in the most part performant, there is a potential significant delay in the initial download time to build the page. The system 1 minimises the download time and reduces the need for the page to go back to the server for information, responses, or lookups.

The system 1 architecture is such as to reduce download times without long and multiple accesses to the server. In most cases the Fat Client has an ASP - Data Container that generates the static area within the page. In dialogues these are at the 'Subject' level. In addition, the ASP creates 'Active HTML' that are the questions, drop down lists, and enterable fields.

The feedback manager 10 and the published ASP/HTML have hierarchies pre-defined to facilitate easy understanding of the grouping of questions, answers, benefits, and motivations. A user guide details the definition of the hierarchies in full. Referring to Fig. 4, the four major levels are:

   1. Subject 150 - The highest level within the hierarchy. Groups, policies of the organisation, registration page, and permissions for the use of customer responses.

   2. Category 151 - This is the second highest level within the group and relates to pre-defined classifications of information. For example 'General Information', 'Profile' information, 'Preferences', and 'Lifestyle'.

3. Sub-Category 152 -a Category has many 'Sub-Categories' within it. A Sub-Category relates to personal details (name, address etc.), and preferences (sensitivities, buying role etc.)

4. Member 153 - a member is a grouping of fields. For example member 'Address' contains a number of address lines. Address line (1) is a field within Member address, Address line (2) is a field within Member address, Address line (3) is a field within Member address.

5. Field 154 - the lowest level of the hierarchy and relates to actual questions and answers. For example Address line (1), '123 Nowhere St', Address line (2), 'Nowhere land', Address line (3), 'Someplace else' etc.

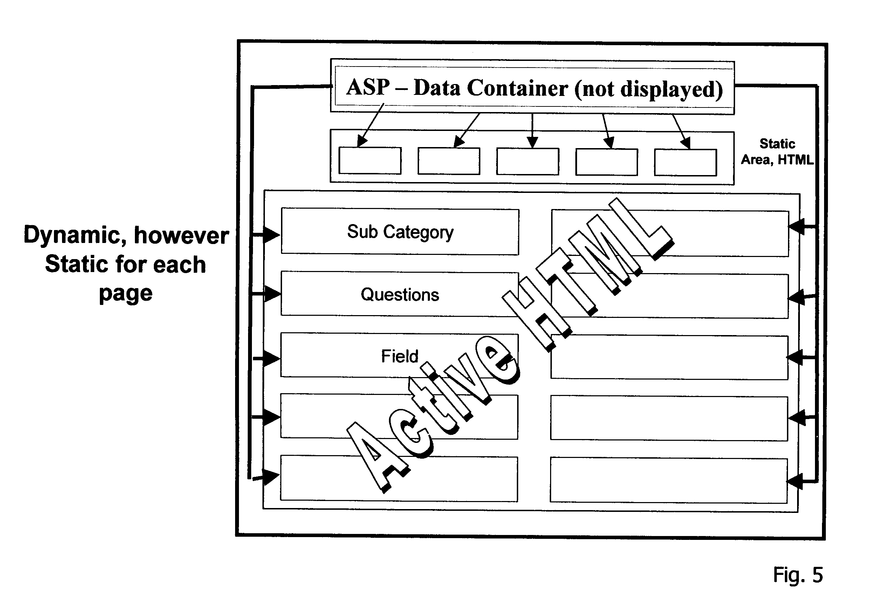

The displays generated by the manager10 incorporate the hierarchy illustrated in Fig. 4. This is shown in the sample screen of Fig. 5.

Incoming Dialogue Manager 2

The incoming dialogue manager manages the receipt of data from respondents. It presents the dialogue to customers, captures the customer dialogue responses, validates data for accuracy and completeness, imposes any dialogue rules (for example pipelining rules) that have been specified by the editor 2B and passes this data to the segmentation manager 3. It uses received data to maintain a unified customer profile database on behalf of all of the sub-systems 20-70. Thus, it both writes data in real time to memory for use by the segmentation manager and maintains the profile database.

Editor 2B

A number of different answer sets can be selected by the editor 2B including:

Nominal: Where values have no referential or positional meaning,
Ordinal: where values are set out in a recognised order,
Interval: where values are equally spaced,
Ratio: where values are equally spaced but includes absolute zero.

When designing and creating a dialogue a user can follow a number of different approaches that are guided by an application wizard executed by the editor 2B. These include:

Inductive: Where the dialog starts with closed (detailed) questions and ends with open questions.
Deductive: Where the dialog starts with open questions and ends with detailed ones.
Combination: Where the dialog alternates between sections of open and closed questions.

A range of different question response options are supported by the application including:

Dichotomous: A question offering two-answer choices.
Multiple-choice: a question offering multiple response choices.
Likert scale: A statement with which the respondent is presented and is required to indicate their level of agreement.
Semantic differential: A scale that is defined between two polar words and the respondent selects the point that represents the direction and intensity of their feelings.
Rating scale: A scale that is defined for rating the importance of a specific attribute,
Word association: A technique where the respondent is required to choose from a number of words.

Question Sequencing

In the displays generated by the manager 2 a number of separate questions are specified. However, not all questions may apply to all respondents. Sequencing rules are stored in the rules base 2A which specify what questions to present consecutively to users on the basis of questions already answered. For example, if a first question asks if the customer is male or female the entire subsequent dialog may be adjusted depending on the answer selected. Sequencing rules allow the user to specify precisely how the presentation of questions to customers is ordered and determined. On the basis of a submitted response, or combination of responses, the subsequent selection and ordering of questions is determined. Thus, the editor 2B allows the user to set up the correct sequencing logic, and this is implemented in real time by the manager 2 for receiving responses from customers. Of course the editor 12 also records such logic for use by the feedback dialogue manager 10.

The three managers 2, 3, 10 operate in a pipelining manner with automatic passing of messages via memory arrays for sequential operation of each manager in turn to conduct a customer dialogue. These messages are simple in nature, as the output from the incoming dialogue manager is simple data which can be readily used by the segmentation manager to execute a configured model to generate a segmentation decision. Likewise, the output from the segmentation manager 3 is a very simple and short message indicating the segment decision cell. The simplicity of the decision format allows the feedback dialogue manager to generate a feedback message according to its logic in a fast manner to achieve real time performance. Session continuity is maintained by a session controller linked with all of the managers, especially bridging eh gap between the feedback and incoming dialogue managers in which the customer is involved.

Segmentation Manager 3

The segmentation manager 3 reads data from a master table maintained by the incoming dialogue manager 7 and processes customer responses. It matches them to micro segments and consolidates customer attributes prior to assigning customers to designated segments or analysing the customer data to discover new segments. The micro segments are then mapped directly to market segments. The segmentation manager 3 consists of three major components:

Segmentation model - This function creates and maintains segments, and associated rules for the segmentation process.

Segmentation run - This function performs customer segmentation analysis using selective, scored, scalar, clustering and decision-tree techniques of segmentation. Once processed, the micro segments are mapped to the marketing segments or to a different segmentation model.

Segmentation analysis - This function produces the reports and graphics displays for further business analysis and interpretation.

Segments are identified in the system 1 by a k-means algorithm process (sometimes known as a k-nearest-neighbour algorithm). This is a learning algorithm which uses a simple form of table look-up to classify data. For each new case, a constant number (k) of instances that are closest to the case are selected.

A micro-segment is a granular level grouping of customers through the application of a single selection rule. Each micro-segment describes a characteristic that can naturally combine with other micro-segments to make a segment. For example, age, gender, income and language are all micro-segments of the demographics segment.

The segmentation run component produces customer 'runs' that group customer responses to the dialogue questions within marketing segments. The runs are displayed using reports and graphical displays for further analysis or possible input to operational or analytical applications (for example, campaign management systems or marketing databases).

The segmentation analysis component produces reports that can be market segment specific or can be run against the production dialogue manager 10 without segmentation. The reports can be viewed directly or can be exported using XML to corporate data warehouse/s, datamarts, BI Universes (for further segmentation analysis) or to data mining engines.

The segmentation manager 3 performs bias computation for enhanced output data quality. Bias is the degree to which the questions, answers, and segmentation rules are biased towards placing a customer in one segment in preference to another, assuming that all customers select the mean of the available predefined answers.

The existence of bias in a dialogue may or may not be significant in terms of its impact on the results. There are many factors involved in the process of understanding bias to allow automation of bias analysis. Principal amongst these is knowledge of the characteristics of the responding *and* non-responding populations. For example:

Let us assume that two segments are to be identified: Insomniacs and Normal Sleepers. Let us also assume that the placement of a respondent will be determined by responses to several weighted questions (rather than asking the outright question). If 10% of the human population are known to be insomniacs, whilst 90 percent are not, then a weighting that results in 90 per cent of respondents entering the Normal Sleeper segment looks correct, even though this may be achieved through biased answers. So far, the bias is good, rather than bad. However, if we then learn that the dialogue is presented to potential respondents only late at night, or access to the dialogue is easier at night, it is possible that a higher proportion of insomniacs will be completing the dialogue compared with the proportion of Normal Sleepers completing the dialogue. This knowledge about the people not responding alters the meaning of the results of any bias analysis.

Other forms of influence on bias are:

- Incomplete sets of segments: bias can arise as a result of failure to define all significant segments, or failure to include all significant segments in the segmentation process.

- Incomplete sets of answers: for example, if the question is asked 'what is your favourite colour' and the only possible answers supplied are 'red' and 'blue', the results are likely to be biased.

- Errors in setting up the segment membership rules.

- Transference of desired responses into stronger weightings. The application of excessively strong weightings to responses that seem more desirable to the user.

- The weightings for different answers have not been defined with consistency.

- Greater tendency for respondents to supply answers to some questions than others. ' If these questions were utilized equally in the segmentation model, results would be skewed towards the segments that use the gender question as there are very few answers to the preference question.

Bias is calculated only for scored and scalar segmentation models. Selective models require an understanding of the population of consolidated attributes and the segments they are associated with. Cluster segmentation models have no bias since they are generated by the *Cluster segmentation* function in which bias is impossible to determine. Bias concerns only weighted questions that are associated with segments and are part of the segment-placement process. Questions without weights are ignored as they do not impact the segmentation process for scored or scalar segmentation models

Bias is determined in three steps:

(a) Bias is determined for each question in the dialogue.
(b) Bias values are summarized for each question.
(c) Bias is calculated for the segmentation model.

Step (a): Bias is determined for each question in the dialogue

For each question, the recorded answers are individually analysed to determine the degree of association each answer has with each of the segments in the segmentation model. For each answer, the weight values associated with each of the segments are recorded. This process is repeated for each answer to each question.

Step (b): Bias figures are summarized for each question

Once all answers for a question have been analysed, a question-level set of 16 segment biases is determined by totalling the answer weights for each of the 16 segments and dividing each figure by the number of answers to the question. This is illustrated in the worked example below. It has been assumed here that the segmentation model contains a total of 16 segments, although a larger or smaller number of segments could be in use in the model.

This set of 16 biases is known as the *Question bias* and represents the average bias of the answers to the question.

Thus, for each segment:

$$\textit{Question bias} = (\ \Sigma \textit{Answer weights for the segment}) / \partial$$

Where $\partial$ = the number of preset answers to the question

Step (c): Bias is calculated for the segmentation model

Once the *Question bias* figures (from step (b)) are known for each question, an average segment-bias is calculated as follows:

- Create a *Segment total bias* figure per segment by adding the *Question bias* for each question associated with the segment.

- Determine an *Average Total Bias* by summing the *Segment total bias* figures and dividing by the number of segments.

- Calculate a final *Segment bias* figure for each segment by dividing the total figures by the *Average Total Bias*.

Thus for each segment:

$$Segment\ total\ bias = \Sigma Question\text{-}bias$$

For the segmentation model:

$$Average\ total\ bias = (\Sigma Segment\ total\ bias\ \text{figures for all the segments}) / \Delta$$

Where $\Delta$ = the number of segments in the segmentation model

For each segment:

$$Segment\ bias = Segment\ total\ bias / Average\ total\ bias$$

At the end of this process, bias has been distributed across the segments in the model.
If the resultant bias figure for a segment is greater than 1, the dialogue is biased in favour of that segment. If the resultant bias figure for a segment is less than 1, the dialogue is biased against that segment. If the resultant figure for a segment is exactly 1, the dialogue has no bias for the segment. Note that (rounding errors apart) the average bias value across all segments in the model is 1.

Bias: a worked example

The following is a complete worked example which shows how bias is calculated. The example used is comparatively trivial, and is not meant to be representative of a real-life segmentation model and its use: The example is based on a simple dialogue consisting of two questions with preset answers.

| Question number | Question | Preset answers |
|---|---|---|
| 1 | What is your income group? | 0 - 8000<br>8001 - 20,000<br>20,001 - 40,000<br>40,001 + |
| 2 | What is your favourite pastime? | Hobbies<br>Parties<br>Reading<br>Sports |

A simple segmentation model is to be used, comprising the following three segments:

Likely targets
Possible targets
Unlikely targets

The user (a member of the marketing division) has assigned the following weightings to the preset answers for the three segments:

| Question | Answer | Weighting for Likely-targets segment | Weighting for Possible-targets segment | Weighting for Unlikely-targets segment |
|---|---|---|---|---|
| Income | 0 - 8000 | 0 | 0 | 2 |
| | 8001 - 20,000 | 2 | 2 | 0 |
| | 20,001 - 40,000 | 3 | 2 | 1 |
| | 40,001 + | 5 | 3 | 0 |
| Pastime | Hobbies | 9 | 2 | 1 |
| | Parties | 1 | 2 | 3 |
| | Reading | 3 | 3 | 3 |
| | Sports | 2 | 5 | 0 |

This provides all the information needed to calculate bias.

Starting with Question 1, the *Question bias* is separately determined for each question.

$$\text{Question bias} = (\Sigma \text{Answer weights for the segment}) / \partial$$

Where $\partial$ = the number of preset answers to the question

| Question | Answer | Weighting for Likely-targets segment | Weighting for Possible-targets segment | Weighting for Unlikely-targets segment |
|---|---|---|---|---|
| Income | 0-8000 | 0 | 0 | 2 |
| | 8001-20,000 | 2 | 2 | 0 |
| | 20,001 - 40,000 | 3 | 2 | 1 |
| | 40,001 + | 5 | 3 | 0 |
| Sum of weights | | 10 | 7 | 3 |
| Number of answers | | 4 | 4 | 4 |
| Question bias | | 10/4 = 2.5 | 7/4 = 1.75 | 3/4 = 0.75 |
| Pastime | Hobbies | 9 | 2 | 1 |
| | Parties | 1 | 2 | 3 |
| | Reading | 3 | 3 | 3 |
| | Sports | 2 | 5 | 0 |
| Sum of weights | | 15 | 12 | 7 |
| Number of answers | | 4 | 4 | 4 |
| Question bias | | 15/4 = 3.75 | 12/4 = 3 | 7/4 = 1.75 |

Next, the *Segment total bias* is calculated for each segment. Then the *Average total bias* is calculated. And finally the *Segment bias* is arrived at.

For each segment:

$$\text{Segment total bias} = \Sigma \text{Question-bias}$$

For the segmentation model:

$$\text{Average total bias} = (\Sigma \text{Segment total bias figures for all the segments}) / \Delta$$

Where $\Delta$ = the number of segments in the segmentation model

For each segment:

*Segment bias = Segment total bias / Average total bias*

| Question | Answer | Weighting for Likely-targets segment | Weighting for Possible-targets segment | Weighting for Unlikely- targets segment |
|---|---|---|---|---|
| Income | 0-8000 | 0 | 0 | 2 |
| | 8001-20,000 | 2 | 2 | 0 |
| | 20,001 - 40,000 | 3 | 2 | 1 |
| | 40,001 + | 5 | 3 | 0 |
| Sum of weights | | 10 | 7 | 3 |
| Number of answers | | 4 | 4 | 4 |
| Question bias | | 10/4 = 2.5 | 7/4 = 1.75 | ¾ = 0.75 |
| | | | | |
| Pastime | Hobbies | 9 | 2 | 1 |
| | Parties | 1 | 2 | 3 |
| | Reading | 3 | 3 | 3 |
| | Sports | 2 | 5 | 0 |
| Sum of weights | | 15 | 12 | 7 |
| Number of answers | | 4 | 4 | 4 |
| Question bias | | 15/4 = 3.75 | 12/4 = 3 | 7/4 = 1.75 |
| | | | | |
| Segment total bias | | 10+15 = 25 | 7+12 = 19 | 3+7 = 10 |
| Average total bias | (25+19+10)/3 = 18 | | | |
| Segment bias | | 25/18 = 1.3889 | 19/18 = 1.0556 | 10/18 = 0.5556 |

The segmentation manager 3 also generates a confidence rating indicating the number of people who could not be allocated to a segment. Confidence is the degree to which the responses that a customer did not supply affect the degree of assurance of the customer's scores and placement in segments. A low confidence rating implies that the segmentation process has determined a result but is not sure of the accuracy of the result. The measure of confidence is based on the number of questions answered in relation to the total number of questions asked. This value is further modified to take into account the importance of the missed questions.

For example, consider the case where, in a dialogue of 20 questions, 19 of the questions provide scores of 1 for a segment but the 20th question provides a score of 100. Obviously, if a respondent does not answer the 20th question, this would have a greater impact on the result than if any of the other questions had not been answered. The confidence score is a reflection of this difference. Confidence scores have meaning only for scored and scalar segmentation models.

Confidence considers only weighted questions i.e. questions that are associated with segments and are involved in the segment-placement process. Questions without weights are ignored as they do not have any impact on the segmentation process.

Confidence is determined in three steps.

1. An importance rating is determined for each question.

2. The importance of each question is determined in the context of the dialogue.

3. The confidence for a given set of responses is determined.

Step 1: An importance rating is determined for each question

For each question, each recorded answer is analysed to determine its degree of association with each of the 16 segments (assuming the segmentation model contains 16 segments). For each pre-set answer to the question, the 16 weighting values (one for each segment) are summed. This process is performed for each answer to the question. Once this process has been completed, the values from all pre-set answers to the question are summed and divided by the total number of answers to the question, giving an average value for each answer. This average value is known as the Question importance.

For each recorded answer to the question:

$$Answer\ importance = \Sigma Weighting\ for\ each\ segment$$

For the question:

$$Question\ importance = (\Sigma Answer\ importance)\ /\ Number\ of\ answers$$

Step 2: The importance of each question is determined in the context of the dialogue

Once Step 1 has been completed for each question in the dialogue, the Question importance ratings for all questions are summed to determine the Total importance for the dialogue. Each individual Question importance is then divided by the Total importance to determine the Confidence contribution of the question in the context of the entire dialogue. The sum of the Confidence contribution ratings for all questions in a dialogue is therefore:

For the entire dialogue:

$$Total\ importance = \Sigma Question\ importance$$

For each question in the dialogue:

$$Confidence\ contribution = Question\ importance\ /\ Total\ importance$$

Step 3: The confidence for a given set of responses is determined

The responses supplied by a respondent are compared against the Confidence contribution of each question answered. The Confidence score for a given respondent will therefore be a number between 0 (if they answered no weighted questions) and 1 (if they answered all weighted questions). For each respondent (taking into account all questions answered by the respondent):

$$Confidence = \Sigma Confidence\ contribution$$

Confidence: a worked example

The following is a complete worked example which illustrates how confidence is calculated. The example is based on a simple dialogue consisting of four questions with pre-set answers.

| Question number | Question | Preset answers |
|---|---|---|
| 1 | What is your income group? | 0 - 8000<br>8001 - 20,000<br>20,001 - 40,000<br>40,001 + |
| 2 | What is your favourite pastime? | Hobbies<br>Parties<br>Reading |
| 3 | How do you rate our service? | Above average<br>Average<br>Very poor |
| 4 | Do you work from home? | Yes |

(continued)

| Question number | Question | Preset answers |
|---|---|---|
| | | No<br>Occasionally |

A simple segmentation model is to be used, comprising the following three segments:

Likely targets
Possible targets
Unlikely targets

The user has assigned the following weightings to the preset answers for the three segments:

| Question | Answer | Likely-targets weighting | Possible-targets weighting | Unlikely- targets weighting |
|---|---|---|---|---|
| Income | 0-8000 | 0 | 0 | 2 |
| | 8001-20,000 | 2 | 2 | 0 |
| | 20,001 - 40,000 | 3 | 2 | 1 |
| | 40,001 + | 5 | 3 | 0 |
| Pastime | Hobbies | 9 | 2 | 1 |
| | Parties | 1 | 2 | 3 |
| | Reading | 3 | 3 | 3 |
| | Sports | 2 | 5 | 0 |
| Service rating | Above average | 3 | 3 | 0 |
| | Average | 4 | 3 | 0 |
| | Very poor | 0 | 2 | 0 |
| Working at home | Yes | 4 | 1 | 0 |
| | No | 0 | 0 | 4 |
| | Occasionally | 1 | 2 | 2 |

Calculating the Question Importance rating for each question requires determination of the Average importance for all the defined responses to answers to the question. For each recorded answer to the question:

$$Answer\ importance = \Sigma Weighting\ for\ each\ segment$$

For the question:

$$Question\ importance = (\Sigma Answer\ importance)\ /\ Number\ of\ answers$$

| Question | Answer | Likely-targets weighting | Possible-targets weighting | Unlikely-targets weighting | Answer importance | Question importance |
|---|---|---|---|---|---|---|
| Income | 0-8000 | 0 | 0 | 2 | 2 | |
| | 8001-20,000 | 2 | 2 | 0 | 2+2 = 4 | |
| | 20,001-40,000 | 3 | 2 | 1 | 3+2+1 = 6 | |
| | 40,001 + | 5 | 3 | 0 | 5+3 = 8 | (2+4+6+8)/4 = 5 |
| Pastime | Hobbies | 9 | 2 | 1 | 9+2+1 = 12 | |
| | Parties | 1 | 2 | 3 | 1+2+3 = 6 | |

(continued)

| Question | Answer | Likely-targets weighting | Possible-targets weighting | Unlikely-targets weighting | Answer importance | Question importance |
|---|---|---|---|---|---|---|
| | Reading | 3 | 3 | 3 | 3+3+3 = 9 | |
| | Sports | 2 | 5 | 0 | 2+5 = 7 | (12+6+9+ 7)/ 4 = 8.5 |
| Service rating | Above average | 3 | 3 | 0 | 3+3 = 6 | |
| | Average | 4 | 3 | 0 | 4+3 = 7 | |
| | Very poor | 0 | 2 | 0 | 2 | (6+7+2)/3 =5 |
| Working at home | Yes | 5 | 2 | 0 | 5+2 = 7 | |
| | No | 0 | 0 | 4 | 4 | |
| | Occasionally | 2 | 3 | 2 | 2+3+2 = 7 | (7+4+7)/3 = 6 |

Once the Question importance rating for each question has been determined, the Total importance for the dialogue and the Confidence contribution for each question can be determined.

For the entire dialogue:

$$Total\ importance = \Sigma Question\ importance$$

For each question in the dialogue:

$$Confidence\ contribution = Question\ importance\ /\ Total\ importance$$

| Question | Answer | Likely- targets weighting | Possible- targets weighting | Unlikely- targets weighting | Answer importance | Question importance | Confidence contribution |
|---|---|---|---|---|---|---|---|
| Income | 0-8000 | 0 | 0 | 2 | 2 | | |
| | 8001-20,000 | 2 | 2 | 0 | 2+2 = 4 | | |
| | 20,001-40,000 | 3 | 2 | 1 | 3+2+1 = 6 | | |
| | 40,001 + | 5 | 3 | 0 | 5+3 = 8 | (2+4+6+ 8) / 4 = 5 | 5 / 24.5 = 0.204 |
| Pastime | Hobbies | 9 | 2 | 1 | 9+2+1 = 12 | | |
| | Parties | 1 | 2 | 3 | 1+2+3 = 6 | | |
| | Reading | 3 | 3 | 3 | 3+3+3 = 9 | | |
| | Sports | 2 | 5 | 0 | 2+5 = 7 | (12+6+9 +7)/4 = 8.5 | 8.5 / 24.5 = 0.347 |
| Service rating | Above average | 3 | 3 | 0 | 3+3 = 6 | | |
| | Average | 4 | 3 | 0 | 4+3 = 7 | | |
| | Very poor 0 | | 2 | 0 | 2 | (6+7+2)/ 3 = 5 | 5/24.5 = 0.204 |
| Working at home | Yes | 5 | 2 | 0 | 5+2 = 7 | | |
| | No | 0 | 0 | 4 | 4 | | |
| | Occasionally | 2 | 3 | 1 | 2+3+2 = 7 | (7+4+7)/ 3= 6 | 6/24.5 = 0.245 |
| Total importance | | | | | | 5+8.5+5 +6 = 24.5 | |

This concludes the pre-processing (Steps 1 and 2) and all that remains is to use the Confidence contribution figures to qualify the answers given by the respondent. In the interests of keeping the example simple, let us assume there are three respondents to the dialogue:

- Respondent A answers questions 1, 2, 3, and 4 (all the questions).

- Respondent B answers questions 1, 2, and 4.

- Respondent C answers question 1.

|  | Q1 Income | Q2 Pastime | Q3 Service rating | Q4 Working at home | Confidence score |
|---|---|---|---|---|---|
| Confidence contribution | 0.204 | 0.347 | 0.204 | 0.245 |  |
| Respondent A | Answered | Answered | Answered | Answered | 0.204+0.347+0.204 +0.245 = 1.000 |
| Respondent B | Answered | Answered |  | Answered | 0.204+0.34 +0.245 = 0.796 |
| Respondent C | Answered |  |  |  | 0.204 |

Based on this, the following conclusions can be drawn.

- Respondent A, having answered all questions, is assigned a confidence score of 1.0, or 100 per cent. This figure means that there is maximum confidence in the segmentation of Respondent A yielding a correct result, assuming the weightings and question content are correct.

- Respondent B, having answered 3 out of 4 questions, is assigned a confidence score of 0.796, the equivalent of 79.6 per cent. This is still a reasonably high confidence score so the resulting segmentation should be good, although there is a possibility of error.

- Respondent C, having answered only one question (the most insignificant question from a contribution perspective) is assigned a confidence of 0.204 or 20.4 per cent. It is safe to say that the results of segmentation in respect of Respondent C will be inconclusive. In this case, the confidence score is below what would result from a normal distribution (33.3 per cent for each of the three segments).

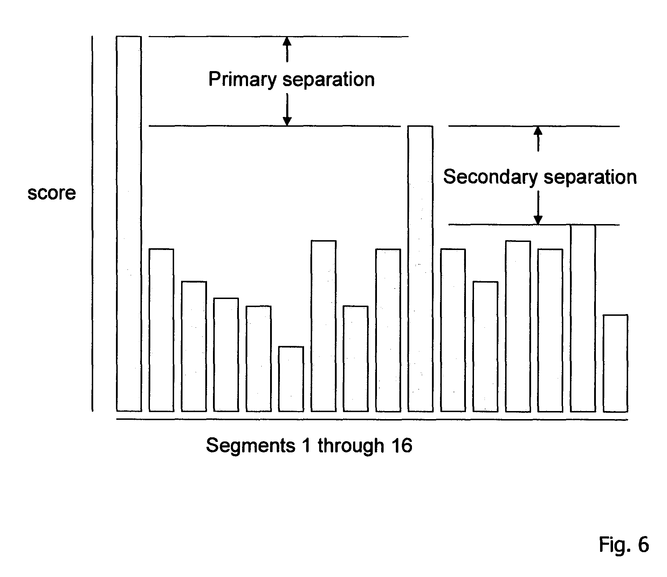

The segmentation manager 3 also performs separation analysis, indicating the closeness of a customer to a segment other than the one selected. Separation is the extent to which a customer's score in their primary segment exceeds their second highest and third highest scores. If shown as a bar chart, a customer's separation score is the height of the highest peak in relation to the customer's second highest and third highest scores. Fig. 6 shows Primary and Secondary separations for a 16-segment model. The system determines two separation figures:

- Primary separation. This is defined as the meaningful difference between the highest and the second highest scores.

- Secondary separation. This is defined as the meaningful difference between the second and third highest scores.

The term 'meaningful' is used to indicate that the figures are expressed as percentages rather than absolute differences. This allows a comparison across respondents, questions, and dialogues. For example, consider the following table of respondent scores being analysed against a three-segment model.

| Respondent | Segment 1 score | Segment 2 score | Segment 3 score | Primary separation | Secondary separation |
|---|---|---|---|---|---|
| Respondent 1 | 15 | 10 | 5 | 15-10 = 5 | 10-5 = 5 |
| Respondent 2 | 3 | 2 | 1 | 3-2 = 1 | 2-1 = 1 |
| Respondent 3 | 10 | 9 | 9 | 10-9 = 1 | 9-9 = 0 |

For the three-segment model above, if the raw scores (as shown above) were used, Respondent 2 would have a *Primary separation* of 1, which looks insignificant compared with the *Primary separation* of Respondent 1 which is 5. However, if the scores and separations are considered in terms of percentages, Respondents 1 and 2 have the same results: in each case, the score in Segment 2 is 33.3 per cent lower than the score in Segment 1, and the score for Segment 3 is 50 per cent lower than the score in Segment 2.

If one examines the separation figures for Respondent 3, in absolute terms the *Primary separation* of 1 is the same as for Respondent 2. But in the (more realistic) percentage terms, the score for Respondent 2 in Segment 2 is 33.3 percent lower than in Segment 1, while the score for Respondent 3 in Segment 2 is only 10 per cent lower than in Segment 1.

The system also determines a third separation figure to provide a single comparative value for the degree of separation. This figure, called the *Separation confidence* is a combination of the *Primary separation* and *Secondary separation* results. Separation is determined in three steps:

1. Determine the *Primary separation* and *Secondary separation*.

2. Apply boosting to the *Primary separation* and *Secondary separation*.

3. Determine the *Separation confidence*.

Step 1: Determine the *Primary separation* and *Secondary separation*

For each respondent, the first, second, and third highest scores within the segment are determined. These are called the primary, secondary, and tertiary raw values. The primary and secondary raw values are then converted into the primary separation score (expressed as a percentage). The formula for this is:

$$\text{Primary separation} = 100 - (\text{Secondary raw value} * 100 / \text{Primary raw value})$$

The tertiary and secondary raw values are then converted into the secondary separation score (expressed as a percentage). The formula for this is:

$$\text{Secondary separation} = 100 - (\text{Tertiary raw value} * 100 / \text{Secondary raw value})$$

Step 2: Apply boosting to the *Primary separation* and *Secondary separation*

Boosting is a mechanism used to exaggerate primary and secondary separations to increase their visibility. Boosting is an optional feature, and may be selected as a processing option for an a priori segmentation run. If the boosting option is selected, boosting is applied to both the *Primary separation* and *Secondary separation* values prior to calculating the *Separation confidence* (Step 3). The mechanism works as shown in the following table.

| Initial value | Computation to produce boosted separation value | Resulting range of boosted separation values |
|---|---|---|
| > 100 | 100 | 100 |
| 66 to 100 | 90 + ((initial value - 66) * 10 / 34) | 90 to 100 |
| 50 to 65 | 66 + ((initial value - 50) * 24 / 15) | 66 to 90 |
| 34 to 49 | 40 + ((initial value - 34) * 26 / 15) | 40 to 66 |
| 25 to 33 | 15 + ((initial value - 25) * 25 / 8) | 15 to 40 |
| 0 to 24 | 0 + ((initial value - 0) * 15 / 24) | 0 to 15 |

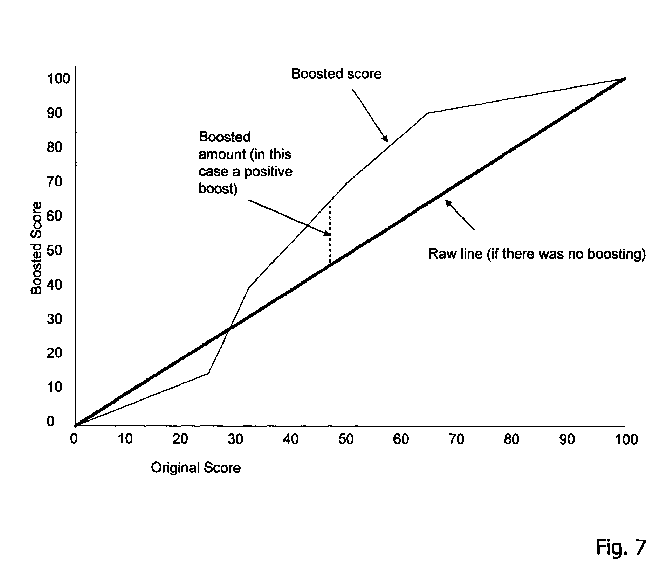

The result of boosting separation values is shown in Fig. 7.

Step 3: Determine the *Separation confidence*

*Separation confidence* is determined by adding half the *Secondary separation* to the *Primary separation*. Results of this computation are capped at 100.

*Separation confidence = Primary separation + (Secondary separation / 2)*

Capped at 100

Separation is primarily of use in scored segmentation models, although a result is determined for scalar segmentation models since scalar models could be constructed so that this information is of significance.

Separation: a worked example

The following is a complete worked example which shows how separation is calculated. The example assumes there are three respondents and that the segmentation processing has already calculated their highest scores for the segments that comprise the model. At this point, it is not necessary to know the answer values for each question, since separation is calculated using segment scores for the entire dialogue.

| Respondent | Score for segment 1 | Score for segment 2 | Score for segment 3 |
|---|---|---|---|
| 1 | 16 | 8 | 2 |
| 2 | 3 | 2 | 1 |
| 3 | 10 | 9 | 9 |

Primary and secondary separations are calculated as follows:

Primary separation = 100 - (Secondary raw value * 100 / Primary raw value)

Secondary separation = 100 - (Tertiary raw value * 100 / Secondary raw value)

This gives the following results.

| Respondent | Score for segment 1 | Score for segment 2 | Score for segment 3 | Primary separation | Secondary separation |
|---|---|---|---|---|---|
| 1 | 16 | 8 | 2 | 100-(8*100/16) = 50 | 100-(2*100/8) = 75 |
| 2 | 3 | 2 | 1 | 100-(2*100/3) = 33.3 | 100-(1*100/2) = 50 |
| 3 | 10 | 9 | 9 | 100-(9*100/10) = 10 | 100-(9*100/9) = 0 |

In this example, the boosting option has been selected and so, once the primary and secondary separation figures have been calculated, they are modified according to the boosting calculations, which are as follows.

| Initial value | Computation to produce boosted separation value | Resulting range of boosted separation values |
|---|---|---|
| > 100 | 100 | 100 |
| 66 to 100 | 90 + ((initial value - 66) * 10 / 34) | 90 to 100 |
| 50 to 65 | 66 + ((initial value - 50) * 24 / 15) | 66 to 90 |
| 34 to 49 | 40 + ((initial value - 34) * 26 / 15) | 40 to 66 |
| 25 to 33 | 15 + ((initial value - 25) * 25 / 8) | 15 to 40 |
| 0 to 24 | 0 + ((initial value - 0) * 15 / 24) | 0 to 15 |

This produces the following results.

| Respondent | Score for segment 1 | Score for segment 2 | Score for segment 3 | Primary separation | Secondary separation | Boosted primary separation | Boosted secondary separation |
|---|---|---|---|---|---|---|---|
| 1 | 16 | 8 | 2 | 50 | 75 | 66+( (50-50) *24/15 ) = 66 | 90+( (75-66) *10/3 4) = 93 |
| 2 | 3 | 2 | 1 | 33 | 50 | 15+( (33-25) *25/8) = 40 | 66+( (50-50) *24/1 5) = 66 |
| 3 | 10 | 9 | 9 | 10 | 0 | 0+((10-0)* 15/24) =6 | 0 |

Finally, the separation confidences are calculated using the formula:

*Separation confidence = Primary separation + (Secondary separation / 2)* Capped at 100

This produces the following results.

| Respondent | Score for segment 1 | Score for segment 2 | Score for segment 3 | Boosted primary separation | Boosted secondary separation | Separation confidence |
|---|---|---|---|---|---|---|
| 1 | 16 | 8 | 2 | 66 | 93 | 66+(93/2) = 112; Capped = 100 |
| 2 | 3 | 2 | 1 | 40 | 66 | 40+(66/2) = 73 |
| 3 | 10 | 9 | 9 | 6 | 0 | 6 + (0/2) =6 |

It can be seen that Respondent 1 has been placed in segment 1 with a high confidence rating (a separation confidence of 100). Respondent 2 has been placed in segment 1 with a reasonably high confidence rating (a separation confidence of 73). But the placement of Respondent 3 in segment 1 is definitely uncertain, with a separation confidence of only 6. For comparative purposes only, the unboosted separation values for this example would be as follows.

| Respondent | Score for segment 1 | Score for segment 2 | Score for segment 3 | Primary separation | Secondary separation | Separation confidence |
|---|---|---|---|---|---|---|
| 1 | 16 | 8 | 2 | 50 | 75 | 50+(75/2) = 87.5 |
| 2 | 3 | 2 | 1 | 33 | 50 | 33+(50/2) = 58 |
| 3 | 10 | 9 | 9 | 10 | 0 | 10+(0/2) =10 |

The segmentation manager 3 also uses a clustering technique for segmentation. Clustering is a form of undirected data mining that identifies clusters of objects based on a set of user-supplied data items. Cluster analysis is of particular value when it is suspected that natural groupings of objects exist where the objects share similar characteristics (for example, clusters of customers with similar product-purchase histories).

Given a set of multi-dimensional data points (or objects), typically the data space would not be uniformly occupied. Data clustering identifies the sparse and crowded parts of the data space, and hence discovers the distribution patterns of the dataset. Clustering is also of value when there are many overlapping patterns in data and the identification of a single pattern is difficult.

Clustering is most effective when applied to spatial data: in other words, where data objects can be represented geometrically in terms of position and distance from a reference point. In the segmentation manager, these references are arrived at for each customer included in the cluster analysis. Only those customers, and those attributes of customers, that are selected by the user are included in the cluster analysis. The results of the cluster analysis are presented in both a report format and a visual presentation of the occurance of the clusters.

K-means clustering method

The K-means process is used by the segmentation manager for data mining as it is robust in its handling of outliers (objects that are very far away from other objects in the dataset). Also, the clusters identified do not depend on the order in which the objects are examined. Also, the clusters are invariant with respect to translations and transformations of clustered objects. The K-means process comprises the following steps.

Step 1: Pre-define a number of clusters

The $K$ in the name of this algorithm represents the number of clusters that are defined prior to the clustering process commencing. The number of clusters is firstly determined by the number of attributes selected for the clustering process, and can be modified by the user.

Step 2: Position the clusters in the data space

The predefined clusters are positioned (usually in a random way) in the data space. The clusters are defined in terms of the criteria that will be used to perform the clustering. For example, if the criteria are located in three-dimensional space and density (such that there are four values, $x$, $y$, $z$, and $d$ for each answer set), the cluster definition will require values for $X$, $Y$, $Z$, and $Density$. Or, if the items to be clustered are records in a table, the cluster positions would be reflections of distribution points in the record-space, with the value of each field being interpreted as a distance from the origin along a corresponding axis of the record-space representing the attribute.
Depending on the approach adopted, the initial positioning of clusters can be random or pre-defined. The number of initial cluster points is user-defined.

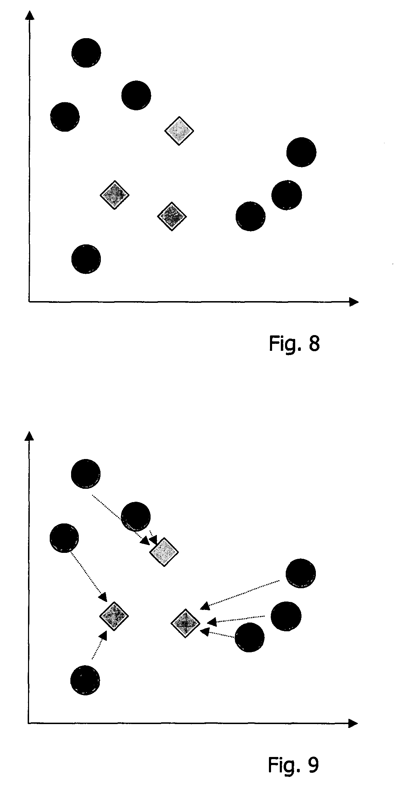

Step 2 - Randomly (or not) position the clusters in the object space (Fig. 8)

Circles represent objects in the object space. Diamonds represent 3 randomly positioned clusters. The three clusters are differently patterned to aid in following the discussion.

Step 3: Allocate objects to clusters

The position of each object is assessed against the position of each cluster. Boundaries are established between the clusters. A boundary is made up of points that are equidistant from each set of two clusters. In a one-dimensional space, the boundary is a point, in a two-dimensional space it is a line, in a three dimensional space it is a plane, and in an $n$-dimension space it is a hyperplane.
These boundaries are used to compare the position of the object with the positions of the two clusters in order to determine the closest cluster. Once the position of the object has been compared against all cluster-pairs, the closest cluster can be identified. The object is then assigned to this cluster. In the case of the object being equidistant from both clusters in a pair, the object is assigned to the first cluster. Clusters are checked in an arbitrary sequence, and ties are broken simply by saying that the first cluster checked wins. Each object is geometrically compared against the position of the cluster points to determine the closest cluster. The object is allocated to the nearest cluster. This is shown in Fig. 9.

Step 4: Re-position each cluster

Once each object has been allocated to a cluster, each cluster is evaluated in terms of its distance from the objects allocated to it. The position of each cluster is changed to coincide with the mean position of the objects allocated to that cluster. The position of each cluster now represents the geometric centroid of the clustered objects.

Step 4 - Move the cluster centroids

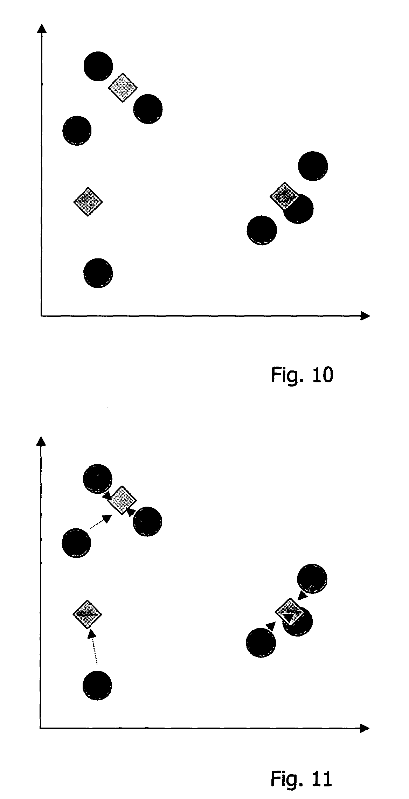

For each cluster, determine the average geometric position of all allocated objects. Change the cluster position to the average position. This is shown in Fig. 10.

Step 5: Repeat Steps 3 and 4

Unless the initial positioning of the clusters was extremely lucky, at least one of the clusters will have moved during Step 4. If this is the case, Steps 3 and 4 are repeated until the position of the clusters becomes stable.

Movement of the position of the clusters in the object space usually causes changes to the allocation of objects to clusters. Note in the following diagram (the repeat of Step 3) that one object previously associated with the tone-shaded cluster is now allocated to the vertically hatched cluster.

Steps 3 and 4 are repeated until objects cease to move from cluster to cluster after re-allocation.

Step 3 Repeat - Allocate the objects to clusters (Fig. 11)

Each object is geometrically compared against the positions of the cluster points to determine the closest cluster. The object is allocated to the nearest cluster. Fig. 11 depicts the final position of the clusters following a further iteration of Steps 3 and 4. At this point, additional passes through Steps 3 and 4 will not alter the position of the clusters and the clustering analysis can be considered complete. At this point all objects have been allocated to one of the clusters.

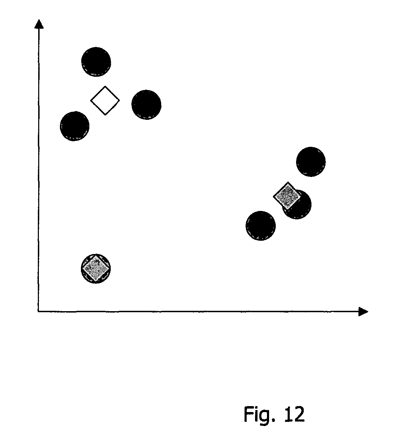

Step 4 Repeat - Move the cluster centroids (Fig. 12)

For each cluster - determine the average geometric position of all allocated objects. Change the cluster position to the average position. If no clusters change position then the process is complete, otherwise return to step 3 and repeat steps 3 and 4 until the clusters no longer change position. This example shows the position of the clusters after three passes - the positions are stable.

Interpretation of clusters

Clustering analysis is an undirected data mining technique for which there is no need to have prior knowledge of the structure that is to be discovered. However, there is a need for the results of cluster analysis to be put to practical use. The results of allocating objects to clusters in a geometric coordinate system can be hard to interpret. This can be overcome by:

- Using visualization techniques to reveal how parameters alter the clustering.

- Using other mining techniques (particularly decision trees) to derive rules to explain how new objects would be assigned to the cluster.

- Conducting a closer examination of the differences in distribution of variable values from cluster to cluster. For example, some clusters might contain values that are close to each other, while other clusters might contain anomalies or larger variations in values.

Clustering analysis is also affected by the number of initial clusters defined by the analyst. In practice, the analyst will usually experiment with different numbers of clusters to determine the best fit (which may be defined as the number of clusters that most successfully minimizes the distance between members of the same cluster and maximizes the distance between members of different clusters).

Other forms of clustering such as the PAM (Partitioning Around Medoid), CLARA (Clustering LARge Applications may alternatively be used, although the above has been found to be particularly effective.

The invention is not limited to the embodiments described but may be varied in construction and detail.

**Claims**

**1.** A dialogue management system for communication between an enterprise and customers, the system comprising:

an incoming dialogue manager for receiving information from customers and for writing the information to memory;

a segmentation manager for operating in real time to read said received information, to dynamically allocate a customer to a segment, and to provide a segmentation decision; and

a feedback manager for using said segmentation decision and stored customer data to generate a feedback message for a customer in real time.

2. A dialogue management system as claimed in claim 1, wherein the dialogue management system interfaces with a plurality of enterprise sub-systems to perform integrated customer dialogue.

3. A dialogue management system as claimed in claim 2, wherein the incoming dialogue manager controls a unified customer profile database on behalf of all of the sub-systems.

4. A dialogue management system as claimed in any preceding claim, wherein the segmentation manager performs offline segmentation analysis using data retrieved from a customer profile database maintained by the incoming dialogue manager.

5. A dialogue management system as claimed in any preceding claim, wherein the incoming dialogue, segmentation, and feedback dialogue managers achieve real-time closed loop dialogue management by pipelining.

6. A dialogue management system as claimed in claim 5, wherein the pipelining involves each manager passing an output to the next manager in turn, and a session controller maintaining a session continuity between an outgoing message from the feedback dialogue manner and the incoming dialogue manager.

7. A dialogue management system as claimed in any preceding claim, further comprising a rules editor for user editing of segmentation rules.

8. A dialogue management system as claimed in claim 7, wherein there are a plurality of segmentation models, at least some of which are modified by the rules editor.

9. A dialogue management system as claimed in any preceding claim, wherein the segmentation manager executes a bias computation process, in which bias is determined for each question in a dialogue, bias values are determined for all questions in total, and bias is determined for a model after processing of a plurality of dialogues.

10. A dialogue management system as claimed in any preceding claim, wherein the segmentation manager executes a confidence rating process to determine a confidence value for a segmentation decision.

11. A dialogue management system as claimed in claim 10, wherein said process allocates an importance rating to each question, determines the importance of each question in the context of the dialogue and uses these values to allocate a confidence rating to a set of customer responses.

12. A dialogue management system as claimed in any preceding claim, wherein the segmentation manager executes a separation process to determine a degree of difference between the segmentation decision and a next segment.

13. A dialogue management system as claimed in claim 12, in which the segmentation manager determines a primary separation between a highest and second segments, and a secondary separation between the second and a third segment and applies boosting in the primary and secondary separation values to determine a separation confidence value.

14. A dialogue management system as claimed in any preceding claim, wherein the segmentation manager performs clustering for data mining to execute a segmentation model.

15. A dialogue management system as claimed in any preceding claim, wherein the feedback manager associates pre-set customer questions with segments, and retrieves these in real time in response to receiving a segmentation decision.

16. A dialogue management system as claimed in any preceding claim, wherein the feedback and the incoming dialogue managers download programs to client systems for execution locally under instructions from a customer.

17. A dialogue management system as claimed in any preceding claim, wherein the feedback manager and the incoming dialogue managers access a stored hierarchy to generate a display for customer dialogue in a consistent format.

**18.** A dialogue management system as claimed in claim 17, wherein the hierarchy includes, in descending order, subject, category, sub-category, field group, and field for an information value.

**19.** A dialogue management system as claimed in any preceding claim, wherein the incoming dialogue manager accesses in real time a rules base comprising an editor for user editing of rules for receiving data.

**20.** A dialogue management system as claimed in any preceding claim, wherein the system uses a mark-up language protocol for invoking applications and passing messages.

**21.** A computer program product comprising software code for performing operations of a dialogue management system as claimed in any preceding claim when executing on a digital computer.

Fig. 1

| | | | |
|---|---|---|---|
| **D1**<br><br>FRAGILE<br>64,789 customers<br>12% | **C1**<br><br>BRITTLE<br>54,448 customers<br>10% | **B1**<br><br>SECURE<br>16,573 customers<br>3% | **A1**<br><br>BONDED<br>26,960 customers<br>5% |
| **D2**<br><br>DETATCHED<br>65,121 customers<br>12% | **C2**<br><br>DEVELOPING<br>49,070 customers<br>9% | **B2**<br><br>VALUED<br>37,656 customers<br>7% | **A2**<br><br>INTIMATE<br>11,083 customers<br>2% |
| **D3**<br><br>EXPLORING<br>21,670 customers<br>4% | **C3**<br><br>POTENTIAL<br>10,951 customers<br>2% | **B3**<br><br>ENGAGED<br>32,282 customers<br>6% | **A3**<br><br>LOYAL<br>59,603 customers<br>11% |
| **D4**<br><br>NASCENT<br>16,112 customers<br>3% | **C4**<br><br>OCCASIONAL<br>11,146 customers<br>2% | **B4**<br><br>REGULAR<br>27,146 customers<br>5% | **A4**<br><br>HABITUAL<br>38,277 customers<br>7% |

Value of relationship

Strength of relationship

Fig. 3

Fig. 2

EP 1 418 519 A1

EP 1 418 519 A1

150

Subject → Policies
Registration Page
Permissions

11

Category → General Info.
My Profile etc.

151

Sub-category → Personal Details
Preferences

152

Question → Address

153

Field → Address Lines

154

Fig. 4

Fig. 5

Fig. 6

score

Primary separation

Secondary separation

Segments 1 through 16

EP 1 418 519 A1

Fig. 7

Fig. 8

Fig. 9

Fig. 10

Fig. 11

Fig. 12

**European Patent Office**

**DECLARATION**

which under Rule 45 of the European Patent Convention shall be considered, for the purposes of subsequent proceedings, as the European search report

**Application Number**

EP 03 39 4102

| The Search Division considers that the present application, does not comply with the provisions of the EPC to such an extent that it is not possible to carry out a meaningful search into the state of the art on the basis of all claims<br><br>Reason: | **CLASSIFICATION OF THE APPLICATION (Int.Cl.7)**<br><br>G06F17/60 |
| --- | --- |

The claims relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines Part B Chapter VIII, 1-6.

The applicant's attention is drawn to the fact that a search may be carried out during examination following a declaration of no search under Rule 45 EPC, should the problems which led to the declaration being issued be overcome (see EPC Guideline C-VI, 8.5).

---
-----

| Place of search | Date | Examiner |
| --- | --- | --- |
| THE HAGUE | 30 January 2004 | Pinheiro, T. |

EPO FORM 1504 (P04C37)